# EUROPÄISCHE PATENTANMELDUNG

(11) **EP 2 213 392 A1**
(43) Veröffentlichungstag der Anmeldung: **04.08.2010**
(21) Anmeldenummer: 10151684.7
(22) Anmeldetag: 26.01.2010
(51) Int. Cl.: B21K 5/02, B23B 31/00, B25D 17/06

(54) **Bohrerhalbzeug, Bohrer und Verfahren zur Herstellung derselben**

(30) Priorität: 02.02.2009 DE 102009007143
(71) Anmelder: Südsta AG, 6304 Zug (CH)
(72) Erfinder: Kleine, Michael, 28832 Achim (DE); Sandikc, Ali, 28307 Bremen (DE)
(74) Vertreter: Eisenführ, Speiser & Partner

(57) **Zusammenfassung**

Die Erfindung betrifft ein Bohrerhalbzeug (1, 100), insbesondere Bohrerhalbzeug (1, 100) zur Herstellung von Bohrern für Akkuschrauber, Bohrhämmer, Elektroschrauber, Schlagbohrmaschinen, Drehbohrmaschinen und Kombinationen derselben, mit einem Schaftbereich (2) zum Einspannen des Bohrerhalbzeuges (1, 100), und mit einem im Wesentlichen zylinderförmigen Kopfabschnitt (14, 114, 214, 314), geeignet, um durch Einbringen von Bohrerwendeln (222, 322) und/oder Schneiden (223, 323) einen Bohrkopf (214, 314) auszubilden. Die Erfindung zeichnet sich dadurch aus, dass der Schaftbereich (2) nur in einem ersten Abschnitt (4) zumindest teilweise als Sechskant, jedoch in einem zweiten Abschnitt (6) im Wesentlichen zylinderförmig ausgebildet ist, wobei der erste Abschnitt (4) einen Außendurchmesser (8) aufweist, der im Wesentlichen dem Außendurchmesser (10) des zweiten Abschnittes (6) entspricht oder etwas kleiner als dieser ist.

## Beschreibung

Die Erfindung betrifft ein Bohrerhalbzeug, insbesondere Bohrerhalbzeug zur Herstellung von Bohrern für Akkuschrauber, Bohrhämmer, Elektroschrauber, Schlagbohrmaschinen, Drehbohrmaschinen und Kombinationen derselben, mit einem Schaftbereich zum Einspannen des Bohrerhalbzeuges, und mit einem im Wesentlichen zylinderförmigen Kopfabschnitt, geeignet, um durch Einbringen von Bohrerwendeln und/oder Schneiden einen Bohrkopf auszubilden.

Die Erfindung betrifft weiterhin einen Bohrer, hergestellt aus einem Bohrerhalbzeug der eingangs genannten Art.

Weiterhin betrifft die Erfindung einen Akkuschrauber, einen Bohrhammer, einen Elektroschrauber, eine Schlagbohrmaschine und/oder eine Drehbohrmaschine und/oder Kombinationen derselben mit einem Bohrer, hergestellt aus einem Bohrerhalbzeug der eingangs genannten Art.

Darüber hinaus betrifft die Erfindung die Verwendung eines Bohrerhalbzeuges der eingangs genannten Art zur Herstellung eines Bohrers, insbesondere zur Herstellung eines Bohrers für Akkuschrauber, Bohrhämmer, Elektroschrauber, Schlagbohrmaschinen, Drehbohrmaschinen und Kombinationen derselben.

Schließlich betrifft die Erfindung ein Verfahren zur Herstellung eines Bohrerhalbzeuges.

Bohrerhalbzeuge, Bohrer, Akkuschrauber, Bohrhämmer, Elektroschrauber, Schlagbohrmaschinen, Drehbohrmaschinen und Kombinationen derselben, Verwendungen und Verfahren der eingangs genannten Art sind aus dem Stand der Technik bekannt.

Aufgabe der vorliegenden Erfindung ist es, Vorrichtungen und Verfahren der eingangs genannten Art zu verbessern.

Diese Aufgabe wird durch die Gegenstände der unabhängigen Ansprüche gelöst.

Die vorliegende Erfindung schließt insbesondere die Erkenntnis ein, dass die Schaftbereiche von Bohrern im Stand der Technik zunehmend als Sechskant ausgebildet werden. Derartige Sechskant-Schäfte sind darüber hinaus zumeist nach DIN 3126 - E 6.3 ausgebildet, um für einen sogenannten 1/4-Zoll-Bltantrieb geeignet zu sein. Denn heutzutage wird der Markt von Akkuschraubern, Bohrhämmer, Elektroschraubern, Schlagbohrmaschinen, Drehbohrmaschinen und Kombinationen derselben zunehmend dominiert von Maschinen, die nur noch nach der vorgenannten DIN genormte Schäfte in ihrem Bohrfutter aufnehmen können. Derartige Bohrfutter ersetzen heutzutage in großem Maße die traditionellen Spannfutter oder Dreibackenfutter zum Einspannen von Bohrern, da sie einen schnellen und bequemen Werkzeugwechsel erlauben und zugleich ein Rutschen der Bohrer, wie es etwa In einem Dreibackenfutter möglich ist, verhindern. Demgemäß werden in gleicher Weise die traditionellen Rundschaftbohrer, d.h. Bohrer mit einem vollständig zylindrischen Schaft, und dementsprechend auch die für diese Bohrer vorgesehenen Bohrerhalbzeuge, ersetzt durch Bohrer bzw. Bohrerhalbzeuge mit einem als Sechskant ausgebildeten Schaft.

Ausführungsformen der Erfindung zeichnen sich nun unter anderem dadurch aus, dass die entsprechenden Bohrerhalbzeuge und Bohrer zwischen dem Sechskant und dem vorderen zylinderförmigen Arbeitsschaft des Kopfabschnitts einen zylindrischen Abschnitt mit im wesentlichen dem gleichen bzw, einem nur sehr geringfügig größeren (etwa 0,1-0,3 mm größeren) Durchmesser wie der größte Durchmesser des Sechskantschaftes aufweisen. Dies geschieht vorteilhaft dadurch, dass der Schaftbereich In einem ersten Abschnitt zumindest teilweise als Sechskant, jedoch in einem zweiten Abschnitt im Wesentlichen zylinderförmig ausgebildet ist, wobei der erste Abschnitt einen Außendurchmesser aufweist, der im Wesentlichen dem Außendurchmesser des zweiten Abschnittes entspricht oder etwas kleiner als dieser Ist.

Ein Vorteil des erfindungsgemäßen Bohrerhalbzeuges liegt nun Insbesondere darin, dass durch die im Wesentlichen gleich großen Außendurchmesser von erstem und angrenzendem zweitem Abschnitt des Schaftbereiches, d.h. von dem den Sechskant aufweisenden Abschnitt und dem im Wesentlichen zylinderförmigen Abschnitt, eine ganz erheblich vereinfachte Herstellung derartiger Bohrerhalbzeuge und somit eine sehr viel günstigere Herstellung möglich ist, als dies aus dem Stand der Technik bekannt war.

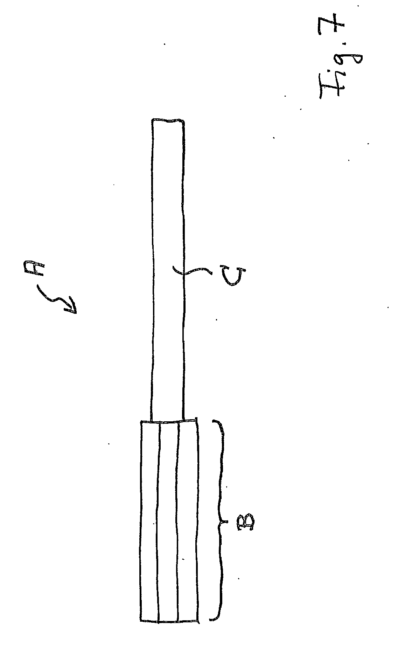

Im Stand der Technik war es für Bohrerdurchmesser kleiner als dem Sechskanteckmaß bisher nur bekannt, den Schaftbereich des Bohrerhalbzeuges aus zwei getrennten Teilen zusammenzusetzen. Der Hintergrund hierfür ist, dass man zur Herstellung eines Bohrers, d.h. zum Fertigen auf Werkzeugmaschinen von Schneiden und Wendeln in einem Kopfabschnitt eines entsprechenden Bohrerhalbzeuges das Bohrerhalbzeug auf Spannzangenbasis In einem zylinderförmigen Abschnitt halten muss. Da sich ein Sechskant nicht auf Spannzangenbasis halten beziehungsweise in eine Spannzange einspannen läßt, wird bis heute im Stand der Technik der Bohrer mit Schneiden und Wendeln aus einer zylinderförmigen Stange gefertigt, die in einer Bohrung des separat hergestellten Sechskant eingelötet wird, so dass der vollständige Bohrer aus zwei Teilen hergestellt werden muss. Ein solcher Bohrer des Standes der Technik ist in der Fig. 7 der anliegenden Zeichnung schematisch dargestellt. Fig. 7 zeigt einen Bohrer A mit einem Sechskant B und einem vorderen zylinderförmigen, in den Sechskant B eingelöteten, als Arbeitsschaft dienenden Kopfabschnitt C, der nicht dargestellte Bohrerwendein und Bohrerschneiden aufweist.

Die vorliegende Erfindung vermeidet nun auf überraschend einfache Weise die vorstehend beschriebene, äußerst komplizierte Herstellung von derartigen Bohrerhalbzeugen des Standes der Technik. Denn indem im Schaftbereich von vornherein einstückig mit dem den Sechskant tragenden ersten Abschnitt der im Wesentlichen zylinderförmig ausgebildete zweite Abschnitt mit gleichem Durchmesser vorgesehen wird, kann die Spannzange das Bohrerhalbzeug im Bereich des einstückig mit dem ersten Abschnitt verbundenen zweiten Abschnittes greifen, so dass anschließend unmittelbar Im sich an den zylinderförmigen Abschnitt des Schaftbereiches anschließenden Kopfabschnitt des Bohrerhalbzeuges die verschiedenen Fertigungsschritte zur Fertigstellung eines Bohrers durchgeführt werden können.

Die Erfindung bietet jedoch noch eine ganz Reihe weiterer und ebenso bedeutender Vorteile. Zunächst liegt Insgesamt aber auch Insbesondere bei Bohrern für Schlagbohrer eine enorm erhöhte Haltbarkeit des mit dem erfindungsgemäßen Bohrerhalbzeug hergestellten Bohrers beziehungsweise gemäß dem erfindungsgemäßen Verfahren hergestellten Bohrers vor. Denn durch das Vermeiden der Zweitelligkeit und der damit notwendigen Lötstelle aus dem Stand der Technik ist der erfindungsgemäße Bohrer beziehungsweise das erfindungsgemäße Bohrerhalbzeug nicht nur sehr viel kostengünstiger als das entsprechende Bohrerhalbzeug beziehungsweise der entsprechende Bohrer aus dem Stand der Technik sondern auch noch sehr viel länger haltbar.

Ein weiterer Vorteil ergibt sich, wenn aus dem Bohrerhalbzeug Hammerbohrer gefertigt werden sollen. Bisher ist es nicht möglich, Hammerbohrer kleineren Durchmessers, also kleiner als 8 mm, mit 1/4-Zoll-Sechskantschaft haltbar zu gestalten, da die Masse des Flugkolbens des Bohrhammers zu der Masse und den Abmessungen des Sechskantschaftes ein ungünstiges Verhältnis für die wünschenswerte Schlagenergleübertragung aufweisen. Dadurch brechen diese Bohrer immer sehr schnell. Dieses Problem wird In überraschend einfacher Weise durch eine geeignete Länge des an den Sechskant anschließenden Zyllnderberelchs gleichen Durchmessers gelöst.

Ein weiterer Vorteil tritt insbesondere dann zutage, wenn der Durchmesser des Kopfabschnittes des Bohrerhalbzeuges beziehungsweise Bohrers kleiner als der Eckmaß-Durchmesser des Sechskant im Schaftbereich des Bohrerhalbzeuges beziehungsweise des Bohrers ist. Denn in einem solchen Falle war es im Stand der Technik aus den oben im Detail beschriebenen Gründen nur möglich, die vorgeschriebene Beschriftung beziehungsweise Bestempelung des Bohrers in dem zylinderförmigen Bereich anzubringen, der später in den Sechskant eingelötet wird. Da dieser zylinderförmige Bereich durch das oben eingehend beschriebene Herstellungsverfahren des Standes der Technik zwingend den gleichen Durchmesser aufweisen muss, wie der Kopfabschnitt beziehungsweise der Bohrkopf, ist es im Stand der Technik bei derartigen Bohrerhalbzeugen beziehungsweise Bohrern mit Durchmessern, die kleiner sind als der Eckmaß-Durchmesser des Sechskants, kaum mehr möglich, die Beschriftung oder Bestempelung mit bloßem Auge zu erkennen.

Denn der Umfang des entsprechenden zylinderförmigen Bereiches ist im Stand der Technik aufgrund des kleinen Durchmessers bei derartigen Bohrern, Bohrerhalbzeugen extrem klein, so dass sich die Beschriftung beziehungsweise Bestempelung nur bei sehr genauem Hinsehen und vor allen Dingen auch nur durch vollständiges Drehen des Bohrers ermitteln läßt. In einer anderen Variante dieser dem Stand der Technik entsprechenden Bohrer wird die Beschriftung daher auf einer Fläche des Sechskants durchgeführt. In diesem Fall kann der Durchmesser des im Elektrowerkzeug befestigten Bohrers nicht mehr abgelesen werden, was erst recht zu Fehlern führt, da der Bediener nicht sicher sein kann, welchen Bohrerdurchmesser er gerade verwendet.

Die Sichtbarkeit von derartigen Bestempelungen beziehungsweise Beschriftungen von Bohrern ist nach Erkenntnis der vorliegenden Erfindung von sehr großer Wichtigkeit, da zum Beispiel beim Anbringen von Fassadenelementen oder Deckenabhängungen oder auch Rohrleitungen in Kraftwerken mit Dübelverbindungen, die durch ein durch die schlechte Lesbarkeit der Beschriftung des Bohrers versehentlich zu großen Bohrer und ein entsprechendes zu großes Loch in der Wand befestigt werden und sich anschließend lösen, im Stand der Technik schwere oder schwerste Unfälle mit teilweise tödlichem Ausgang verursacht werden können, da die teilweise extrem schweren und massiven Gegenstände sich nach einiger Zeit völlig unvermittelt aus ihrer Verankerung lösen und auf Personen herabstützen können.

Der erfindungsgemäß in seinem Durchmesser dem Eckmaß-Durchmesser des Sechskants des Schaftbereiches entsprechende zylinderförmige Bereich des Schaftbereiches des Bohrerhalbzeuges beziehungsweise Bohrers gemäß der vorliegenden Erfindung trägt somit zu einer ganz erheblichen Erhöhung der Sicherheit beim Herstellen von derartigen Verbindungen bei.

Darüber hinaus kann der erfindungsgemäße Bohrer auch In Werkzeugmaschinen eingesetzt werden, In dem dieser auf dem Zylinderabschnitt eingespannt wird. Dadurch ergeben sich weitere Einsatzbereiche.

Bevorzugte Ausführungsformen sind in den Unteransprüchen angegeben.

Im Folgenden werden nun anhand der Zeichnungen bevorzugte Ausführungsformen der Erfindung beschrieben. Dabei werden gleiche, ähnliche oder funktionsgleiche Teile mit den gleichen Bezugszeichen bezeichnet. Die Zeichnung zeigt:
- Figur 1: eine Seitenansicht einer ersten Ausführungsform eines erfindungsgemäßen Bohrerhalbzeugs;
- Figur 2: eine vergrößerte Teilansicht der Figur 1;
- Figur 3: eine zweite Ausführungsform eines erfindungsgemäßen Bohrerhalbzeugs;
- Figur 4: einen Bohrer entsprechend der ersten Ausführungsform der Figuren 1 und 2;
- Figur 5: eine vergrößerte Teilansicht der Figur 4;
- Figur 6: einen Bohrer entsprechend der zweiten Ausführungsform gemäß den Figuren 4 und 5; und
- Figur 7: einen Bohrer des Standes der Technik In schematischer Darstellung.

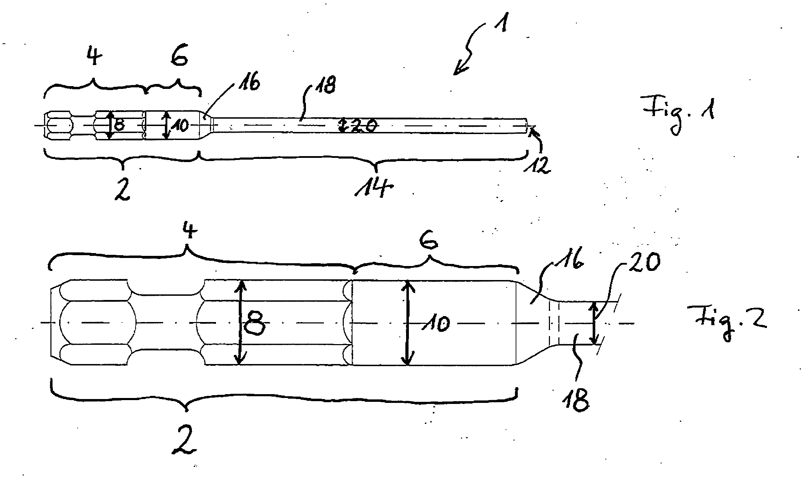

Figur 1 zeigt eine erste Ausführungsform 1 eines erfindungsgemäßen Bohrerhalbzeugs In einer schematischen Seitenansicht. Das Bohrerhalbzeug der Figur 1 ist Insbesondere geeignet zur Herstellung von Bohrern für Akkuschrauber, Bohrhämmer, Elektroschrauber, Schlagbohrmaschinen, Drehbohrmaschinen und Kombinationen derselben. Das Bohrerhalbzeug 1 der Figur 1 läßt sich verwenden zur Herstellung eines Bohrers für derartige Maschinen.

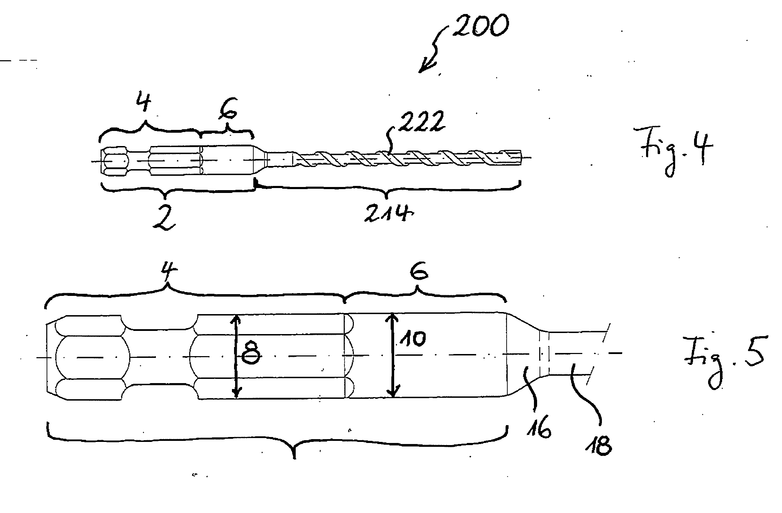

Das Bohrerhalbzeug der Figur 1 weist einen Schaftbereich 2 zum Einspannen des Bohrerhalbzeugs 1, beispielsweise in eine Spannzange zur Herstellung eines Bohrers, insbesondere eines Bohrers 200, 300 gemäß den Figuren 4-6, insbesondere von Bohrerwendeln 222, 322 und Schneiden 223, 323 eines Bohrers 200, 300, auf. Der Schaftbereich 2 weist einen teilweise als Sechskant ausgebildeten Abschnitt 4 auf und einen sich direkt anschließenden, im Wesentlichen zylinderförmig ausgebildeten zweiten Abschnitt 6 auf. Der größte beziehungsweise maximale Außendurchmesser 8 des ersten Abschnittes 4 entspricht im Wesentlichen dem Außendurchmesser 10 des im Wesentlichen zylinderförmig ausgebildeten zweiten Abschnittes 6 des Schaftbereiches 2.

Ohne dass dies der Zeichnung maßstabsgetreu zu entnehmen ist, ist der maximale Außendurchmesser 8 des ersten Abschnittes 4 zwischen 0,1-0,3 mm kleiner als der maximale Außendurchmesser 10 des zweiten Abschnittes 6. Erster Abschnitt 4 und zweiter Abschnitt 6 des Schaftbereiches sind einteilig ausgebildet beziehungsweise aus einem einzigen Teil hergestellt. Der Sechskant 4 weist eine umlaufende Nut 5 auf, die der Verriegelung in einem entsprechenden üblichen Maschinenfutter, beispielsweise eines Bohrhammers, dient.

Die Länge des ersten Abschnittes 4 ist größer, im dargestellten Ausführungsbeispiel um etwa den Faktor 1,8 größer, als die entlang der Längsachse 12 des Bohrerhalbzeugs 1 gemessene Länge des zweiten Abschnittes 6. Die Länge des zweiten Abschnittes 6 entspricht in dem dargestellten Ausführungsbeispiel der Spannlänge einer handelsübilchen Spannzange.

Der Sechskant im ersten Abschnitt 4 ist als 1/4-Zoll-Bitantrieb nach DIN 3126 - E 6.3 ausgebildet.

Das Bohrerhalbzeug 1 der Figur 1 weist darüber hinaus einen Kopfabschnitt 14 auf. Der Kopfabschnitt 14 weist einen Übergangsbereich 16 und einen zylinderförmigen Bereich 18 auf. Der Übergangsbereich 16 stellt einen Übergang zwischen dem Durchmesser 10 des zweiten Abschnittes 6 des Schaftbereiches 2 und einen nur etwa halb so großen Durchmesser 20 des Zylinders 18 dar.

Der Kopfabschnitt 14 wird durch ein erfindungsgemäßes Verfahren mittels Fließpressen beziehungsweise Massivumformung von Draht, bevorzugt von Draht mit einem Durchmesser 10, hergestellt.

Der Kopfabschnitt 14 ist geeignet, um durch Einbringen von Schneiden einen Bohrkopf auszubilden. Hierfür kann das Bohrerhalbzeug 1 der ersten Ausführungsform gemäß Figur 1 im zweiten Abschnitt 6 des Schaftbereiches 2 mit einer Spannzange gegriffen beziehungsweise In einer Spannzange im zweiten Abschnitt 6 eingespannt werden.

Figur 2 zeigt eine vergrößerte Teilansicht der Figur 1.

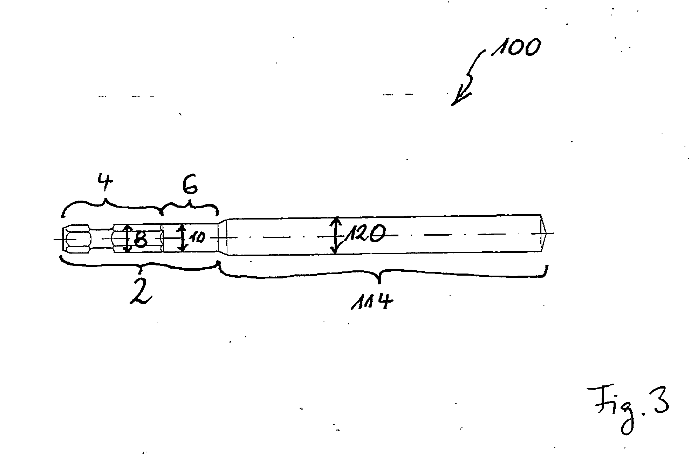

Figur 3 zeigt eine zweite Ausführungsform eines erfindungsgemäßen Bohrerhalbzeugs. Im Gegensatz zu der ersten Ausführungsform der Figuren 1 und 2 zeigt die Ausführungsform 100 der Figur 3 einen Kopfabschnitt 114, der einen Durchmesser 120 aufweist, der deutlich größer ist, als der Durchmesser 10 des zweiten Abschnittes 6 beziehungsweise der Durchmesser 8 des ersten Abschnittes 4 des Schaftbereiches 2. Im Übrigen entspricht das Bohrerhalbzeug 100 der Figur 3 jedoch der ersten Ausführungsform der Figuren 1 und 2.

Figur 4 zeigt einen Bohrer entsprechend der ersten Ausführungsform der Figuren 1 und 2. Der Bohrer 200 der Figur 4 wurde aus dem Bohrerhalbzeug 1 gemäß der ersten Ausführungsform der Figuren 1 und 2 hergestellt. Der Bohrer 200 trägt in seinem Kopfabschnitt 214 Bohrerwendeln 222 und die Bohrerschneiden 223. Im Übrigen entspricht der Bohrer 200 In seinem Schaftbereich 2 dem Bohrerhalbzeug 1 der Figuren 1 und 2.

Figur 5 zeigt eine vergrößerte Teilansicht der Figur 4.

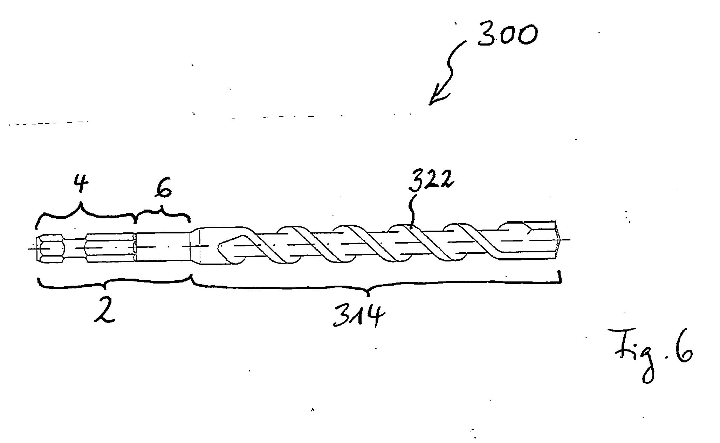

Figur 6 zeigt einen Bohrer entsprechend der zweiten Ausführungsform gemäß den Figuren 4 und 5. Der Bohrer 300 der in der Figur 6 dargestellten zweiten Ausführungsform eines erfindungsgemäßen Bohrers wurde aus dem Bohrerhalbzeug 100 der Figur 3 hergestellt, in dem das Bohrerhalbzeug 100 der Figur 3 im zweiten Abschnitt 6 des Schaftbereiches 2 in eine Spannzange eingespannt wurde und anschließend der Kopfabschnitt 114 mit Bohrerwendeln 322 und Bohrerschneiden 323 versehen worden ist.

## Patentansprüche

1. Bohrerhalbzeug (1, 100), insbesondere Bohrerhalbzeug (1, 100) zur Herstellung von Bohrern für Akkuschrauber, Bohrhämmer, Elektroschrauber, Schlagbohrmaschinen, Drehbohrmaschinen und Kombinationen derselben,
mit einem Schaftbereich (2) zum Einspannen des Bohrerhalbzeuges (1, 100), und mit einem im Wesentlichen zylinderförmigen Kopfabschnitt (14, 114, 214, 314), geeignet, um durch Einbringen von Bohrerwendeln (222, 322) und/oder Schneiden (223, 323) einen Bohrkopf (214, 314) auszubilden,
**dadurch gekennzeichnet, dass** der Schaftbereich (2) in einem ersten Abschnitt (4) zumindest teilweise als Sechskant, jedoch in einem zweiten Abschnitt (6) im Wesentlichen zylinderförmig ausgebildet ist, wobei der erste Abschnitt (4) einen Außendurchmesser (8) aufweist, der im Wesentlichen dem Außendurchmesser (10) des zweiten Abschnittes (6) entspricht oder etwas kleiner als dieser ist.

2. Bohrerhalbzeug (1, 100) nach Anspruch 1,
wobei der maximale Außendurchmesser (8) des ersten Abschnittes (4) etwas kleiner, bevorzugt zwischen etwa 0,1 bis etwa 0,3 mm kleiner, als der maximale Außendurchmesser (10) des zweiten Abschnittes (6) ist.

3. Bohrerhalbzeug (1, 100) nach einem der vorstehenden Ansprüche,
wobei erster Abschnitt (4) und zweiter Abschnitt (6), bevorzugt das gesamte Bohrerhalbzeug (1, 100), einteilig und/oder aus einem Teil hergestellt sind.

4. Bohrerhalbzeug (1, 100) nach einem der vorstehenden Ansprüche,
wobei die Länge des ersten Abschnittes (4) im Wesentlichen der Länge des zweiten Abschnittes (6) entspricht.

5. Bohrerhalbzeug (1, 100) nach einem der vorstehenden Ansprüche,
wobei die Länge des ersten Abschnittes (4) größer oder maximal gleich der Länge des zweiten Abschnittes (6) ist.

6. Bohrerhalbzeug (1, 100) nach einem der vorstehenden Ansprüche,
wobei der erste Abschnitt (4) als 1/4-Zoll-Bitantrieb ausgebildet ist.

7. Bohrerhalbzeug (1, 100) nach einem der vorstehenden Ansprüche,
wobei der erste Abschnitt (4) DIN 3126 - E.6.3 entspricht.

8. Bohrerhalbzeug (1, 100) nach einem der vorstehenden Ansprüche,
wobei der Außendurchmesser (20, 120) des Kopfabschnittes ( 14, 114, 214, 314) größer, bevorzugt mindestens 10 % größer, oder kleiner, bevorzugt mindestens 10 % kleiner, als der Außendurchmesser (10) des zweiten Abschnittes (6) ist.

9. Bohrerhalbzeug (1, 100) nach einem der vorstehenden Ansprüche,
wobei das Bohrerhalbzeug (1, 100) durch Massivumformung und/oder durch Fließpressen eines Drahtes hergestellt ist.

10. Bohrer (200, 300), insbesondere Bohrer für Akkuschrauber, Bohrhämmer, Elektroschrauber, Schlagbohrmaschinen, Drehbohrmaschinen und Kombinationen derselben, hergestellt aus einem Bohrerhalbzeug (1, 100) nach einem der vorstehenden Ansprüche 1 bis 9.

11. Bohrer (200, 300) nach Anspruch 10,
mit einem Bohrkopf (214, 314), wobei der Außendurchmesser des Bohrkopfes (214, 314) größer, bevorzugt mindestens 10 % größer, oder kleiner, bevorzugt mindestens 10 % kleiner, als der Außendurchmesser (10) des zweiten Abschnittes (6) ist.

12. Akkuschrauber, Bohrhammer, Elektroschrauber, Schlagbohrmaschine, Drehbohrmaschine und/oder Kombinationen derselben, mit einem Bohrer (200, 300) nach einem der vorstehenden Ansprüche 10 oder 11.

13. Verwendung eines Bohrerhalbzeuges (1, 100) nach einem der vorstehenden Ansprüche 1 bis 9 zur Herstellung eines Bohrers (200, 300), insbesondere eines Bohrers (200, 300) für Akkuschrauber, Bohrhämmer, Elektroschrauber, Schlagbohrmaschinen, Drehbohrmaschinen und/oder Kombinationen derselben.

14. Verfahren zur Herstellung eines Bohrhalbzeuges (1, 100) und/oder eines Bohrers (200, 300),
**dadurch gekennzeichnet, dass** das Bohrhalbzeug (1, 100) und/oder der Bohrer (200, 300) durch Massivumformung und/oder Fließpressen eines Drahtes gebildet werden.
